# EUROPÄISCHE PATENTSCHRIFT

(11) **EP 2 174 325 B1**
(45) Veröffentlichungstag und Bekanntmachung des Hinweises auf die Patenterteilung: **25.05.2011**
(21) Anmeldenummer: 08759276.2
(22) Anmeldetag: 18.06.2008
(51) Int. Cl.: H01F 7/06

(54) **BETÄTIGUNGSMAGNET**
ACTUATING MAGNET
AIMANT D'ACTIONNEMENT

(30) Priorität: 31.07.2007 DE 102007036310
(43) Veröffentlichungstag der Anmeldung: 14.04.2010
(73) Patentinhaber: Hydac Electronic GmbH, 66128 Saarbrücken (DE)
(72) Erfinder: BILL, Martin, 66625 Nohfelden (DE); FUCHS, Patrik, 66126 Saarbrücken (DE)
(74) Vertreter: Bartels & Partner
(86) Internationale Anmeldenummer: PCT/EP2008/004884
(87) Internationale Veröffentlichungsnummer: WO 2009/015732

(56) Entgegenhaltungen:
- CH-A- 271 223
- DE-A1- 3 132 538
- DE-A1-102004 017 089
- DE-A1-102004 056 193
- DE-U1- 8 806 061
- US-A- 4 771 198

## Beschreibung

Die Erfindung betrifft einen elektrisch bestrombaren Betätigungsmagneten mit mindestens einem in einem Gehäuse angeordneten Spulenkörper, auf dem eine Spulenwicklung aufgebracht ist, mit einem im Spulenkörper zumindest teilweise geführten Betätigungsteil und mit einer Sicherheitsvorrichtung zur Vermeidung einer möglichen Brandgefahr, wobei zumindest Teile des Betätigungsmagneten mit mindestens einem passiven Sicherheitsmittel der Sicherheitsvorrichtung ausgestattet sind, um der Brandgefahr wirksam zu begegnen.

Dahingehend elektrisch bestrombare Betätigungsmagnete sind in einer Vielzahl von Ausführungsformen auf dem Markt frei erhältlich. Beispielhaft sei als Vertreter dahingehender Betätigungsvorrichtungen, insbesondere in Form eines Proportional-Doppelhubmagneten, auf die vorbekannte Lösung nach der DE 10 2004 017 089 B4 verwiesen. Die bekannte Lösung dient dem Betätigen von Ventilen, mit mindestens zwei auf jeweils einem Spulenkörper, jeweils zwischen zwei Ringflanschen angeordneten Spulenwicklungen, die zumindest teilweise ein Polrohr umfassen, indem ein Ankerteil bewegbar geführt ist, das an seinem einen Ende über eine magnetische Trennung in einen Polkern übergeht, in dem ein Betätigungsstößel als Betätigungsteil geführt ist und mit seinem anderen Ende über eine weitere magnetische Trennung zumindest teilweise ein Abschlußteil übergreift, wobei zwischen den einander benachbart gegenüberliegenden Spulenkörpern eine scheibenförmige Polplatte angeordnet ist. Bei der bekannten Lösung bilden der Polkern, das Polrohr sowie die magnetischen Trennungen und das Abschlußteil eine Baueinheit, auf die die jeweiligen Spulenkörper mit ihren Spulenwicklungen und der Polplatte als eine weitere Baueinheit aufschiebbar sind. Um immer eine definierte Festlegeposition zu haben, ist vorgesehen, dass zumindest einer der einander benachbart zugewandten Ringflansche ein vorspringendes Bauteil aufweist, das in Eingriff bringbar ist mit einer zugeordneten Ausnehmung im Ringflansch des anderen Spulenkörpers. Wie bereits eingangs erwähnt, dienen solche Betätigungsmagnete überwiegend dem Ansteuern von hydraulischen Ventilen; es werden aber zusehends auch neue technische Bereiche erschlossen, für die dahingehende Betätigungsmagnete sinnvoll einsetzbar sind.

So zeigt die nachveröffentlichte DE 10 2005 056 816 zur Notfallauslösung einer Kopfstütze für einen Fahrzeugsitz, die im Crashfall des Fahrzeugs sich nach vorne bewegt um dergestalt den freien Auftreffweg zwischen Hinter kopf des Sitzbenutzers und Kopfauftrefffläche an der Kopfstütze zu verringern, eine Entriegelungsvorrichtung unter Einsatz eines Betätigungsmagneten. Zum Ansteuern der Kopfstützenentriegelung dient ein entsprechendes Steuerteil, das entlang einer ersten Achse verfahrbar ist und das in einer Betätigungsstellung einen zu der ersten Achse quer verlaufenden Schwenkweg für eine Steuereinrichtung frei gibt, die um eine zweite Achse schwenkbar angeordnet ist. Die dahingehende Steuereinrichtung verfügt ferner über ein Verriegelungsteil, das mittels des Betätigungsteiles des Magneten über die Steuereinrichtung entriegelbar ist und dann die Bewegungsbahn für das anzusteuernde Steuerteil für einen Auslösevorgang der Kopfstütze nach vorne freigibt.

Allen Betätigungsmagneten mit ihren Spulenwickl ungen liegt das Problem zugrunde, dass im Fall von Fehlströmen, von Überhitzungen bei Überbeanspruchung des Magneten etc. es zum Brandfall kommen kann und da zusehends aus Gewichts- und Praktikabilitätsgründen für zumindest einen Teil der Komponenten des Betätigungsmagneten Kunststoffmaterialien eingesetzt werden, die leicht schmoren können oder gar brennen, ist insoweit die Gefahr erhöht, dass ausgehend von der elektrischen Spulenwicklung sich ein Brand über die angesprochenen Kunststoffteile auf weiter angeschlossene Komponenten des technischen Systems nachteilig auswirkt, wie Ventile, Kopfstützen und dergleichen mehr. So werden heute sowohl die Gehäuseteile des Betätigungsmagneten als auch deren Umspritzung in Kunststoff ausgeführt und weitere einschlägige Kunststoffteile sind die Spulenkörper für die Aufnahme der Spulenwicklung und die Kunststoffisolierlagen für die auf dem Spulenkörper aufgebrachte Drahtwicklung, regelmäßig ausgebildet in Form eines Kupferdrahtes.

Vorzugsweise ist der jeweilige Kupferdraht als Elektrodraht über seine gesamte Länge mit einer sogenannten Lackisolierung aus Kunststoff umgeben, um dergestalt in der Wicklung eine elektrische Entkopplung zwischen den Wickellagen zu haben; allein die dahingehende Kunststofflackisolierung ist sehr wärmeempfindlich, schmort mithin leicht durch, und bildet insoweit einen idealen Brandherd aus. Man versucht der dahingehenden Brandgefahr in der Praxis dadurch zu begegnen, dass man innerhalb des elektrischen Versorgungskreises der Spulenwicklung eine elektrische Sicherung, überwiegend in Form einer Schmelzsicherung , anbringt, die Auslösen soll, also den elektrischen Stromkreis unterbrechen soll, sobald es aufgrund von durchgeschmorten Teilen der Lackisolierung zu einem Kurzschluß kommt; allein zeigen die Fälle in der Praxis, dass dies nicht genügt, um der möglichen Brandgefahr wirksam entgegentreten zu können. So sind Fälle aufgetreten, bei denen die Schmelzsicherung zwar ausgelöst hat und dennoch aufgrund eines Kurzschlusses es zu einem (Schmor)brand, ausgehend von dem jeweils eingesetzten Betätigungsmagneten kam.

Ein Betätigungsmagnet der eingangs genannten Art ist aus CH 271223 bekannt geworden. Der bekannte Betätigungsmagnet ist ein Elektromagnet, welcher ein Gehäuse, elektrische Leiter und ein elektrisch isolierendes Material innerhalb des Gehäuses rings um die elektrischen Leiter aufweist. In das Gehäuse wird ein Gemisch gegeben, welches ein polymerisierbares Öl, einen wasserfreien Metallhalogenid-Polymerisationskatalysator, ein Lösungsmittel für letzteren und Rizinusöl enthält. Das zunächst flüssige Isoliermaterial wird über eine im oberen Teil des Gehäuses vorgesehene Einfüllöffnung eingetragen und härtet anschließend während einer vollständigen Polymerisation des Öls vollständig aus. Das als Isoliermaterial dienende polymerisierte Öl weist Anteile von im Wesentlichen nicht brennbarem Tricresylphosphat auf.

Dadurch, dass zumindest Teile des Betätigungsmagneten mit mindestens einem passiven Sicherheitsmittel ausgestattet sind, um der Brandgefahr wirksam zu begegnen, werden die Sicherheitsmittel nicht mehr außerhalb des eigentlichen Geschehens, beispielsweise in Form einer Schmelzsicherung im elektrischen Versorgungskreis angeordnet, sondern direkt am Ort des Geschehens, wo die mögliche Brand- oder Schmorsituation unmittelbar auftreten kann. Somit kommt es ohne größeren Zeitverzug unmittelbar zum Einwirken der Sicherheitsvorrichtung, die insoweit zum integrierten Bestandteil des Betätigungsmagneten wird.

Ausgehend von diesem Stand der Technik liegt daher der Erfindung die Aufgabe zugrunde, die bekannten in Betätigungsmagnete integrierten Sicherheitsvorrichtungen dahingehend weiter zu verbessern, dass selbst bei Verzicht auf eine Schmelzsicherung Schmor- und Brandentwicklungen, ausgehend von dem jeweils eingesetzten Betätigungsmagneten, wirksam vermieden werden können. Eine dahingehende Aufgabe löst ein Betätigungsmagnet mit den Merkmalen des Patentanspruches 1 in seiner Gesamtheit.

Gemäß dem kennzeichnenden Teil des Patentanspruchs 1 dient zur Realisierung der Spulenwicklung für den Betätigungsmagneten ein stromführender Draht, der mit einer Isolierung umgeben ist, die zum Herbeiführen des frühen Versagensfalles durch elektrischen Kurzschluss der Spulenwicklung aus einer Isolierstoffklasse gewählt ist, die in jedem Fall unter einer Klassengröße der ansonst eingesetzten Drahtisolierung liegt und vor dem Erreichen der kritischen Temperatur für einen möglichen Brand durchschmilzt. Durch das frühzeitige Wegschmelzen der Isolierung ist der möglichen Brandgefahr in jedem Fall wirksam begegnet, da die Spulenwicklung zumindest teilweise zu einem aus den einzelnen Wicklungslagen bestehenden Block, insbesondere einem Kupferleitungsblock, zusammengeschmolzen wird, der so ohne Weiteres nicht thermisch zerstörbar ist und der den Betätigungsmagneten, auch was eine weitere Stromaufnahme anbelangt, außer Betrieb setzt, anders ausgedrückt zu einem Kurzschluss führt.

Zum Herbeiführen des frühen Versagensfalles wird ein elektrischer Kurzschluß der Spulenwicklung herbeigeführt, in dem diese von dem Material ihrer Ummantelung her aus einer Isolierstoffklasse gewählt ist, die rechtzeitig vor dem Erreichen der kritischen Temperatur für einen Brand durchschmilzt. Während man im Stand der Technik normalerweise für den Kupferdraht der Spulenwicklung eine sehr hitzeresistende Lackisolierung nach DIN EN 60317 auswählt, um im hohen Maße die Funktionssicherheit zu gewährleisten und sich darauf verläßt, dass die Schmelzsicherung zeitnah anspricht, was wie dargelegt nicht gewährleistet werden kann, geht die erfindungsgemäße Lösung einen anderen Weg, indem eine Lackisolierung für den Spulendraht verwendet wird, die derart eine geringe Erweichungstemperatur aufweist, dass es auch bei bereits geringer Wärme- oder Hitzeentwicklung in vorgebbaren Grenzen zu einem gewollten Durchbrennen der benachbarten Isolierlagen kommt.

Dies hat zur Folge, dass die Spulenwicklung zumindest teilweise zu einem aus den Einzelwicklungslagen bestehenden Kupferblock zusammen geschmolzen wird, der so ohne weiteres nicht thermisch zerstörbar ist, und der insbesondere den Betätigungsmagneten - auch was eine weitere Stromaufnahme anbelangt - außer Betrieb setzt. Praktische Versuche haben gezeigt, dass der erfindungsgemäße Betätigungsmagnet sogar ohne die zusätzliche Schmelzsicherungslösung im elektrischen Versorgungskreis für die Spulenwicklung auskommt, und dass durch das frühzeitige Wegschmelzen der Isolierung der Brandgefahr in jedem Fall wirksam begegnet ist.

Unabhängig hiervon spricht aber nichts dagegen, zur Erhöhung der Sicherheit zusätzliche elektrische Sicherheitseinrichtungen, wie konventionelle Schmelzsicherungen, im elektrischen Kreis vorzusehen, die bei bestehenden elektrischen Kreisen auch bereits vor Ort vorhanden sein können. Dergestalt ergibt sich ein besonders zuverlässiges redundantes Sicherheitskonzept.

Bei einer bevorzugten Ausführungsform des erfindungsgemäßen Betätigungsmagneten ist vorgesehen, dass als aktives Sicherheitsmittel ein Löschmedium dient, wie Löschschaum, Löschgas und Löschfluid unter Einbezug von nanopartikulären Löschsubstanzen. Neben den aktiven Sicherheitsmitteln für die bevorzugt innerhalb des Betätigungsmagneten ein Bevorratungsraum vorgesehen ist, können auch passive Sicherheitsmittel dergestalt eingesetzt werden, dass diese integrierter Bestandteil von Komponenten des Betätigungsmagneten sind. So können die Kunststoffteile des Betätigungsmagneten mit schwer entflammbaren oder flammhemmenden Wirksubstanzen ausgerüstet oder auch bestehende Systeme nachgerüstet werden.

Bei einer besonders bevorzugten Ausführungsform der erfindungsgemäßen Sicherheitsvorrichtung ist jedoch vorgesehen, dass Sicherheitsmittel zum Einsatz kommen, die der Realisierung einer Art Sollbruchstelle dienen, zum Herbeiführen eines frühen unkritischen Versagensfalles für den Betätigungsmagneten.

Weitere vorteilhafte Ausführungsformen der erfindungsgemäßen Lösung sind Gegenstand der sonstigen Unteransprüche.

Im folgenden wird der erfindungsgemäße Betätigungsmagnet anhand eines Ausführungsbeispiels nach der Zeichnung näher erläutert. Dabei zeigen in prinzipieller und nicht maßstäblicher Darstellung die
- Fig. 1: einen Längsschnitt durch einen Doppelhubmagneten;
- Fig. 2: in perspektivischer Ansicht eine einzelne Spule für den Ma- gneten nach der Fig.1 mit teilweise auf dem Spulenkörper aufgebrachter Spulenwicklung;
- Fig. 3 und 4: in der Art einer Schaltplandarstellung die Stromversorgung für die Spulenwicklung eines Betätigungsmagneten; einmal mit, einmal ohne Schmelzsicherung.

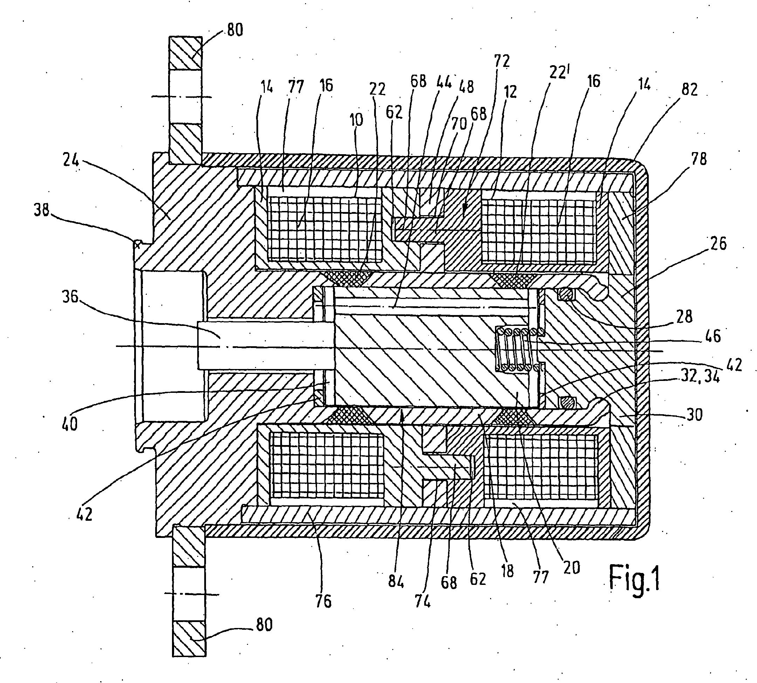

Die in der Fig.1 im Längsschnitt dargestellte Betätigungsvorrichtung ist in der Art eines sog. Doppelhubmagneten ausgebildet, insbesondere in Form eines Proportional-Doppelhubmagneten, der überwiegend zum Betätigen von nicht näher dargestellten hydraulischen oder pneumatischen Ventilen eingesetzt wird. Vergleichbare Betätigungsmagnete, auch in der Art eines Einfach-Hubmagneten, können zur Ventilsteuerung eingesetzt werden, können aber auch dem Auslösen von Sicherheitseinrichtungen dienen, wie einer Kopfstützenauslösung, aufgezeigt in der DE 10 2005 056 816. Die in der Fig.1 gezeigte Betätigungsvorrichtung weist zwei Spulen 10,12 auf, wobei jede Spule 10,12 mit einem Spulenkörper 14 versehen ist, auf den eine Spulenwicklung 16 aufgebracht ist, beispielsweise in Form eines lackierten Elektrodrahtes, vorzugsweise in Form eines Kupferdrahtes. Der Aufbau dahingehender Spulen ist in der Magnettechnik üblich, so dass an dieser Stelle hierauf nicht mehr näher eingegangen wird. Die beiden Spulen 10,12 umfassen ein Polrohr 18, in dem ein Ankerteil 20 längsverschiebbar und mithin bewegbar geführt ist.

In Blickrichtung auf die Fig.1 gesehen ist das Polrohr 18 an seinem vorderen Ende über eine erste magnetische Trennung 22 mit dem flanschartig sich verbreiternden Polkern 24 verbunden und auf seiner anderen Seite gleichfalls über eine zweite magnetische Trennung 24 mit einem Abschlußteil 26. Polrohr 18 und Polkern 24 sind einstückig aus einem magnetisch leitenden metallischen Werkstoff gebildet und können beispielsweise als Drehteil konzipiert sein. Durch spanende Bearbeitung lassen sich in dem Polrohr 18 nutartige Vertiefungen erhalten, die dann vorzugsweise über ein Schweiß- oder Lötauftragsverfahren mit einem magnetisch nicht leitenden Werkstoff verfüllt werden, der dann die jeweilige magnetische Trennung 22 oder 22' bildet. Hinter der zweiten magnetischen Trennung 22' schließt sich dann das Abschlußteil 26 an, das außenumfangsseitig mit einer Ringnut versehen ist, in die ein Dichtring 28 eingesetzt ist. Zum freien Ende hin ist das Polrohr 18 nach innen umgebördelt und zwischen Ankerteil 20 und einem stegartig verbreiterten Absatz 30 des Abschlußteils 26 ist in diesem eine nutartige Vertiefung 32 vorgesehen, in die das Polrohrende 34 kraft- und formschlüssig eingreift. Die dahingehende Anordnung zwischen Polrohr 18 und Abschlußteil 26 in Verbindung mit dem Dichtring 28 erlaubt eine Hochdruckanwendung des Doppelhubmagneten bis 250 bar und mehr.

Das Ankerteil 20 weist an seinem vorderen Ende einen Betätigungsstößel 36 auf und bildet zusammen mit diesem ein zumindest teilweise im jeweiligen Spulenkörper 14 geführtes Betätigungsteil aus. Der Betätigungsstößel 36 durchgreift ferner den Polkern 24 mittig und ist zum Betätigen eines nicht näher dargestellten hydraulischen Ventils, einer Sicherheitseinrichtung für eine Kopfstütze etc. vorgesehen, wobei die dahingehenden zusätzlichen Systemteile sich über eine Anschlußstelle 38 am Polkern 24 mit der Betätigungsvorrichtung verbinden lassen. Das Ankerteil 20 ist in einem Aufnahmeraum 40 zwischen zwei Antiklebscheiben 42 geführt, die ein magnetisches Ankleben des Ankerteils 20 vermeiden helfen. Der Aufnahmeraum 40 ist zum einen durch die Innenumfangsseite des Polrohres 18 begrenzt sowie nach vorne durch den Polkern 24 und zur anderen Seite durch das Abschlußteil 26. Des weiteren verfügt das Ankerteil 20 über eine Durchgangsbohrung 44, die einen Druckausgleich innerhalb des Aufnahmeraumes 40 herstellt, soweit dieser über das Ankerteil 20 in zwei Teilräume aufgeteilt ist. Die maximale Längsverfahrbewegung des Ankerteils 20 ist durch die Anschläge in Form der Antiklebscheiben 42 vorgegeben.

Ferner stützt sich in Blickrichtung auf die Fig.1 gesehen das Ankerteil 20 auf der rechten Seite an einer Druckfeder 46 ab, wobei eine weitere, nicht dargestellte und gegenläufig wirkende Druckfeder im hydraulischen oder pneumatischen Ventil, oder in einer Sicherheitseinrichtung angeordnet sein kann, um gegebenenfalls eine Gegenkraft über den Betätigungsstößel 36 auf das Ankerteil 20 zu erzeugen. Über die dahingehende Krafteinwirkung ließe sich das Ankerteil 20, wie in Fig.1 dargestellt, mittenzentrieren, wobei die genannte Mittenzentrierung noch dadurch mit unterstützt werden kann, dass man beide Spulen 10,12 über ihre jeweilige Spulenwicklung 16 sinnfällig bestromt und eine Verfahrbewegung des Ankerteils 20 in der einen oder anderen Richtung (ziehend oder drückend) geschieht dann über entsprechende Mehrbestromung der jeweils zuordenbaren Spule 10 oder 12. Zwischen den beiden Spulen 10,12 ist eine scheibenförmige Polplatte 48 angeordnet, die gleichfalls das Polrohr 18 umgibt.

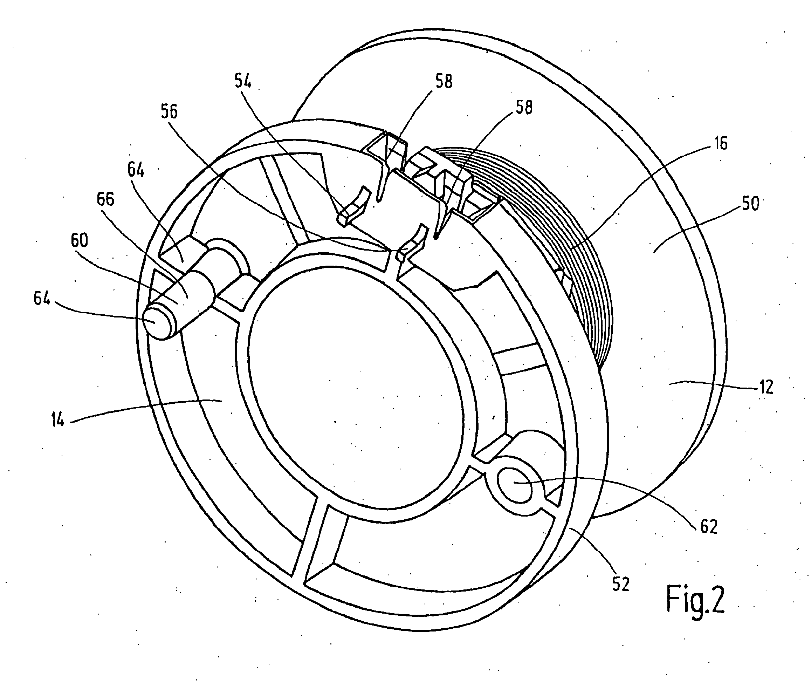

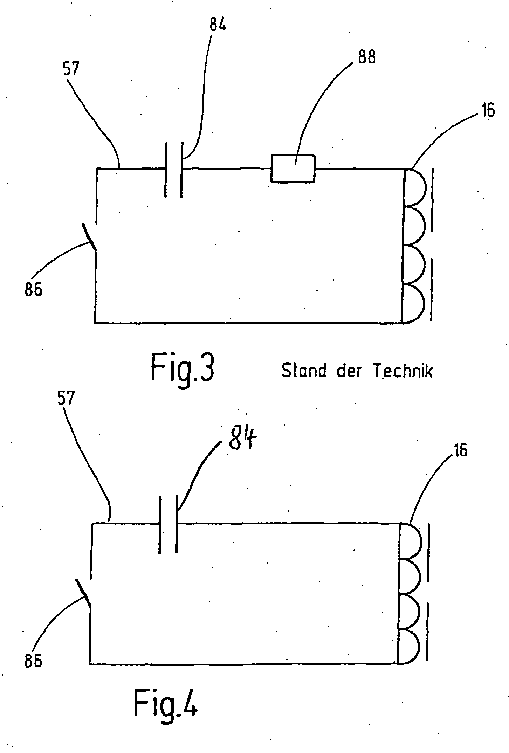

Der Aufbau einer einzelnen Spule 12 ist exemplarisch in der Fig.2 wiedergegeben. Die Spule 12 weist neben der eigentlichen Spulenwicklung 16 auf dem Spulenkörper 14 aufgewickelt zwei Ringflansche 50,52 auf. Vorzugsweise ist der dahingehende Spulenkörper 14 aus einem Spritzgußteil gebildet und weist in Blickrichtung auf die Fig.2 gesehen an seiner Oberseite zwei Anbindungsstellen 54,56 auf, über die sich jeweils Anfang und Ende (nicht dargestellt) der Spulenwicklung 16 an dem zuordenbaren Spulenkörper 14 festlegen lassen. Ferner dienen die beiden Anbindungsstellen 54,56 dem Anschluß der Spulenwicklung 16 an einen Stromversorgungskreis 57 üblicher Bauart gemäß den Darstellungen nach den Fig.3 und 4. Für eine dahingehende elektrische Verbindung mit dem Versorgungskreis 57 dienen des weiteren zwei an der Oberseite des Ringflansches 52 angeordnete Vertiefungen 58, die wiederum dem Eingriff einer nicht näher dargestellten Kontaktierungseinrichtung dienen, um dergestalt die angesprochene elektrische Verbindung zu einem Steckerteil (nicht dargestellt) des Stromversorgungskreises 57 zu den Anbindungsstellen 54,56 herzustellen. Insbesondere durchgreift dabei das jeweilige Drahtende der Spulenwicklung 16 quer zur Vertiefung 58 verlaufend den Ringflansch 52.

In Blickrichtung auf die Fig. 2 gesehen und um etwa jeweils 90° versetzt zu den Anbindungsstellen 54 und 56 ist auf der einen Seite ein vorspringendes Bauteil 60 angeordnet, und auf der diametral gegenüberliegenden Seite eine korrespondierende Ausnehmung 62. Das vorspringende Bauteil 60 ist in einem Versteifungssteg 64 aufgenommen, der Bestandteil des kammerartigen Ringflansches 52 ist. An diesen Versteifungssteg 64 schließt sich ein zylindrisches Mittelteil 66 des vorspringenden Bauteils 60 an, das in einen konisch zulaufenden Eingriffszapfen 68 übergeht. Der dahingehend konisch sich verjüngende Eingriffszapfen 68 ist dafür vorgesehen, in die konisch zulaufende Ausnehmung 62 des Ringflansches 52 der anderen Spule 10 einzugreifen, die ansonsten als Gleichteil wie die Spule 12 aufgebaut ist. Ferner dient das zylindrische Mittelteil 66 des vorspringenden Bauteils 60 dem Durchgriff der Durchtrittsöffnung 70 in der mittigen Polplatte 48. Um den Eingriff des vorspringenden Bauteils 60 in die zuordenbare Ausnehmung 62 zu erleichtern, ist letztere gleichfalls innenumfangsseitig mit einer korrespondierenden Konizität versehen.

Die als Gleichteile ausgebildeten Spulen 10,12 sind dann in Blickrichtung auf die Fig.2 gesehen um 180° zueinander versetzt über ihre Ringflansche 52 miteinander in Verbindung zu bringen unter Zwischenaufnahme der Polplatte 48 zwischen den benachbarten Ringflanschen 52, um dann zu einem Spulenkörperaufbau zu gelangen, wie er Gegenstand der Darstellung nach der Fig.1 ist und insofern eine weitere zweite und als Ganzes mit 72 bezeichnete Baueinheit bildet. Um die Anbindungsstellen 54,56 eines jeden Ringflansches 52 aufeinander zuweisen lassen zu können, ist gemäß der Darstellung nach der Fig.1 in die mittlere Polplatte 48 eine Ausnehmung 74 eingelassen.

Wie sich des weiteren aus der Fig.1 ergibt, sind die beiden Spulen 10,12 nach außen hin von einem zylindrischen Mantel 76 umgeben, der wiederum aus magnetisch leitendem Material besteht. Im vorliegenden Ausführungsbeispiel ist zwischen dem Außenumfang der Spulenwicklung 16 und der Innenumfangsseite des Mantels 76 eine ringförmiger Hohlraum 77 gebildet. Der dahingehende Hohlraum 77 kann beispielsweise der Aufnahme eines Löschmittels dienen, was im Nachfolgenden noch näher erläutert werden wird. Die Bildung weiterer anderer Hohlräume wäre denkbar, beispielsweise im Bereich der Anbindung des Polrohrendes 34 mit dem stegartig verbreiterten Absatz 30 des Abschlußteils 26 oder im Bereich der Druckfeder 46. Die Schaffung weiterer Hohlräume zum Befüllen mit einem geeigneten Löschmedium wäre in Abhängigkeit der vorgegebenen Platzverhältnisse denkbar. Auch könnte man eine Löschmedienversorgung von außen her andenken, bei dem ein von außen auf den Betätigungsmagneten aufgesetzter Vorratsbehälter in medienführender Verbindung ist mit Innenteilen der aufgezeigten Betätigungsvorrichtung.

Der angesprochene zylindrische Mantel 76 ist endseitig einmal über eine Preßpassung mit einer absatzartigen Stufe im Polkern 24 mit diesem verbunden und einmal mit einer Polabschlußplatte 78, die sich innenumfangsseitig auf dem Absatz 30 des Abschlußteils 26 abstützt. Der Polkern 24 weist darüber hinaus in Richtung seines freien Endes zwei Befestigungsflansche 80 auf, die mit entsprechenden Durchtrittsöffnungen versehen dem Durchgriff von nicht näher dargestellten Befestigungsschrauben dienen zwecks Festlegung an nicht näher dargestellten Ventil- oder Sicherheitsgehäuseteilen, an die die Betätigungseinrichtung anschließbar sein soll. Insoweit ist die Betätigungseinrichtung auch in der Art eines modularen Aufbaukonzeptes ausgebildet. Von den Befestigungsflanschen 80 aus ist die sonstige Betätigungsvorrichtung außenumfangsseitig von einem Gehäuseteil 82 umgeben, das sich insbesondere, sofern es aus Kunststoff besteht, auf die sonstigen Komponenten, vorzugsweise in dichtender Weise, aufspritzen läßt.

Der vorgestellte Doppelhubmagnet ist nur exemplarisch zu sehen; selbstverständlich kann anstelle des Doppelhubmagneten auch ein Einzelhubmagnet treten, wie er in dieser oder ähnlicher Form in der DE 10 2005 056 816 aufgezeigt ist. Insoweit kann dann auch der Betätigungsstößel 36 (nicht dargestellt) über den freien stirnseitigen Rand des Betätigungsmagneten vorstehen.

Der nunmehr vorgestellte Betätigungsmagnet in Form einer Betätigungsvorrichtung wird erfindungsgemäß mit einer Sicherheitsvorrichtung zur Vermeidung einer möglichen Brandgefahr versehen, indem zumindest Teile des Betätigungsmagneten mit aktiven und/oder passiven Sicherheitsmitteln ausgestattet werden. Als aktive Sicherheitsmittel können beispielsweise Löschmedien vorgesehen sein, wie Löschschaum, Löschgas oder Löschfluid unter Einbezug von nano-partikulären Löschsubstanzen, beispielsweise auf Gelbasis.

Sofern Stickstoff als Löschgas dienen soll, haben sich als Stickstoffträger Melamin oder melaminhaltige Wirkverbindungen bewährt. Als Löschfluid für den Austrag von Wasser kann Aluminium-Trihydroxyd (ATH) und/oderMagnesium Hydroxyd (MDH), auch in kapsel- oder pastöser Form, mit gutem Erfolg eingesetzt werden. Als Löschschaum eignen sich Ammonium Polphosphate (APP) und als nanopartikuläre Löschsubstanzen können Silicate und/oder Graphit eingesetzt werden, beispielsweise indem sie in einer Gelbasissubstanz integriert sind. Die dahingehenden Löschmedien ließen sich beispielsweise in dem angesprochenen Hohlraum 77 zwischen Außenseite der jeweiligen Spulenwicklung 16 und der Innenseite des Mantels 76 aufnehmen. Aufgrund der guten aktiven Abdichtsituation für den Betätigungsmagneten ließen sich die dahingehenden Löschmedien auch langfristig im Hohlraum 77 einkapseln. Sofern beispielsweise über eine Bohrung eine Medienverbindung zur Umgebung des Betätigungsmagneten hergestellt wird, ließe sich auch von außen auch nachträglich bei bereits bestehenden Betätigungsvorrichtungen der jeweilige Hohlraum 77 mit dem Löschmedium erst- aber auch nachbefüllen. Auch könnte eine auf dem Magneten aufgesetzte Vorratsvorrichtung (nicht dargestellt) insbesondere im Notfall permanent für Nachschub an Löschmedium sorgen. Kommt es zum Stör- oder Versagensfall mit starker Erhitzung der jeweiligen Spulenwicklung 16, sind die dahingehenden Löschmedien geeignet, die entstehende thermische Energie abzuführen und im übrigen zu beherrschen.

Zusätzlich oder alternativ zu den beschriebenen aktiven Sicherheitsmitteln können auch sog. passive Sicherheitsmittel treten, die dadurch charakterisiert sind, dass sie schwer entflammbar sind oder eine flammhemmende Wirkung haben. Als passive Sicherheitsmittel dienen hier insbesondere Stoffe, wie:
- Ammonium Phosphat (AP)
- Ammonium Polyphosphat (APP)
- Resorcinol bis-Diphenylphosphat (PDP)
- Roter Phosphor (RP)
- Tri-n-butyl Phosphat (TBP)
- Tricresyl Phosphat (TCP)
- Triphenyl Phosphat (TPP).

Die dahingehenden Stoffe wirken dann insbesondere, wenn sie zumindest teilweise Bestandteil des Gehäuses sind, beispielsweise in Form des Abschlußteils 26 oder in Form der Gehäuse-Kunststoffumspritzung 82. Weiter können diese Bestandteile des jeweiligen Spulenkörpers 10,12 sein oder selbst die elektrische Mantelisolierung der jeweiligen Spulenwicklung 16 ausbilden. Insbesondere wenn die genannten Komponenten aus einschlägigen Kunststoffmaterialien gebildet sind, lassen sich die passiven Sicherheitsmittel sehr gut untermischen oder clusterartig auch nachträglich in die entsprechenden Kunststoffwandungen einsetzen.

Zusätzlich oder alternativ zu den beschriebenen aktiven und passiven Sicherheitsmitteln kann ein weiteres Sicherheitsmittel in der Art einer Sollbruchstelle realisiert sein zum Herbeiführen eines frühen unkritischen Versagensfalles für den Betätigungsmagneten. Die dahingehende Sollbruchstellen-Situation soll anhand des Ausführungsbeispiels nach den Fig.3 und 4 näher erläutert werden. Dabei zeigt die Fig.3 eine Lösung nach dem Stand der Technik. Wie vorstehend erwähnt, ist die jeweilige Spulenwicklung 16 über einen entsprechenden elektrischen Versorgungskreis 57 an eine Stromversorgungsquelle, beispielsweise in Form einer Batterie, angeschlossen. Durch Schließen eines Schalters 86 läßt sich die Spulenwicklung 16 über die Batterie 84 mit Strom versorgen, um dergestalt Betätigungsvorgänge auslösen zu können. Des weiteren ist der dahingehende elektrische Versorgungskreis 57 über eine Sicherungseinrichtung, wie eine Schmelzsicherung 88, abgesichert. Stand der Technik gemäß Fig.3 ist es, normalerweise für den Kupferdraht der Spulenwicklung 16 eine sehr hitzeresistente Lackisolierung nach DIN EN 60317 auszuwählen, um in hohem Maße die Funktionssicherheit zu gewährleisten. Man verläßt sich dabei darauf, dass die hitzeresistente Lackisolierung so lange Bestand hat, bis jedenfalls zeitnah die Schmelzsicherung 88 auslöst, um die Stromversorgung zu unterbrechen. Wird keine Energie mehr nachgeführt, kann auch der Betätigungsmagnet nicht durchbrennen oder zu schmoren anfangen. Leider bewährt sich das dahingehende Sicherheitskonzept in der Praxis nicht und es kommt insoweit zum elektrischen Schmoren und zu Bränden. Verwendet wird hier regelmäßig im Stand der Technik ein Wickeldraht nach DIN EN 60317-13 (1994).

Bei der erfindungsgemäßen Lösung nach der Fig. 4 ist es nun so, dass man als Lackisolierung für den Spulendraht eine solche verwendet, die derart eine geringe Erweichungstemperatur aufweist, dass es auch bei bereits geringer Wärme- oder Hitzeentwicklung in vorgebbaren Grenzen zu einem gewollten Durchbrennen der benachbarten Isolierlagen kommt. Dies hat dann zur Folge, dass die Spulenwicklung 16 zumindest teilweise zu einem aus den Einzelwicklungslagen bestehenden Block, insbesondere Kupferleitungsblock, zusammengeschmolzen wird, der so ohne weiteres nicht thermisch zerstörbar ist und der insbesondere den Betätigungsmagneten - auch was eine weitere Stromaufnahme anbelangt - außer Betrieb setzt. Dabei kann sogar auf die zusätzliche Schmelzsicherung 88 nach der bekannten Lösung völlig verzichtet werden.

Durch das frühzeitige Wegschmelzen der Isolierung ist der möglichen Brandgefahr in jedem Fall wirksam begegnet und für die Spulenwicklung 16 wird bei der erfindungsgemäßen Lösung ein Wickeldraht nach DIN EN 60317, Ausgabe 1994, eingesetzt gemäß den Teilen 1,2,3,4,12,19,20,21,34 oder ein Wickeldraht nach IEC 317 part 1,2,3,4,12,19,20,21,34. Die gewählte Isolierstoffklasse liegt dann in jedem Fall unter einer Klassengröße der ansonst eingesetzten Drahtisolierung. Um eine besonders wirksame Sicherheitsvorrichtung zu schaffen, ist aber jedenfalls vorgesehen, dass die Schmelztemperatur der einschlägigen Bauteile für den Betätigungsmagneten bzw. die Betätigungsvorrichtung über der Schmelztemperatur der eingesetzten Lackisolierung für den Elektrodraht in Form des Kupferdrahtes liegt. So schmilzt beispielsweise die Wicklung aus Kupferdraht mit geringer Wärmeklasse F bei beispielsweise 130°C, wohingegen der im wesentlichen aus Kunststoff bestehende Spulenkörper 10,12 eine Schmelztemperatur von 155°C hat. Vergleichbare Überlegungen gelten auch für die Wärmeresistenz der sonst eingesetzten Kunststoffkomponenten für den Betätigungsmagneten.

Bei einer besonders bevorzugten Ausführungsform können für einen Betätigungsmagneten mehrere aktive und passive Sicherheitsmittel zum Einsatz kommen. Mit der erfindungsgemäßen Lösung ist es möglich, eine deutliche Erhöhung der Sicherheit im Betrieb dahingehender Betätigungsmagnete zu erreichen.

## Patentansprüche

1. Betätigungsmagnet, elektrisch bestrombar,
- mit mindestens einem in einem Gehäuse (76, 82) angeordneten Spulenkörper (14), auf dem eine Spulenwicklung (16) aufgebracht ist,
- mit einem im Spulenkörper (14) zumindest teilweise geführten Betätigungsteil (20, 36), und
- mit einer Sicherheitsvorrichtung zur Vermeidung einer möglichen Brandgefahr,
- wobei zumindest Teile des Betätigungsmagneten mit mindestens einem passiven Sicherheitsmittel der Sicherheitsvorrichtung ausgestattet sind, um der Brandgefahr wirksam zu begegnen,
- **dadurch gekennzeichnet, dass** zur Realisierung der Spulenwicklung (16) für den Betätigungsmagneten ein stromführender Draht dient, der mit einer Isolierung umgeben ist, die zum Herbeiführen des frühen Versagensfalles durch elektrischen Kurzschluss der Spulenwicklung (16) aus einer Isolierstoffklasse gewählt ist, die in jedem Fall unter einer Klassengröße der ansonst eingesetzten hitzeresistenten Drahtisolierun liegt und vor dem Erreichen der kritischen Temperatur für einen möglichen Brand durchschmilzt.

2. Betätigungsmagnet nach Anspruch 1, **dadurch gekennzeichnet, dass** für die Spulenwicklung (16) ein Wickeldraht nach DIN EN 60317, Ausgabe 1994, gemäß den Teilen 1, 2, 3, 4, 12, 19, 20, 21, 34 oder ein Wickeldraht nach IEC 317 part 1, 2, 3, 4, 12, 19, 20, 21, 34 eingesetzt ist.

3. Betätigungsmagnet nach einem der vorhergehenden Ansprüche, **dadurch gekennzeichnet, dass** die Isolierung eine Lackisolierung für den stromführenden Draht, vorzugsweise in Form eines Kupferdrahts, ist, und dass die Schmelztemperatur der einschlägigen Bauteile für den Betätigungsmagneten über der Schmelztemperatur der eingesetzten Lackisolierung liegt.

4. Betätigungsmagnet nach einem der vorhergehenden Ansprüche, **dadurch gekennzeichnet, dass** als passives Sicherheitsmittel schwer entflammbare oder flammhemmende Stoffe zum Einsatz kommen und/oder Sicherheitsmittel zur Realisierung einer Art Sollbruchstelle zum Herbeiführen eines frühen unkritischen Versagensfalles für den Betätigungsmagneten.

5. Betätigungsmagnet nach einem der vorhergehenden Ansprüche, **dadurch gekennzeichnet, dass** als passive Sicherheitsmittel Stoffe dienen, wie:
- Ammonium Phosphat (AP)
- Ammonium Polyphosphat (APP)
- Resorcinol bis-Diphenylphosphat (PDP)
- Roter Phosphor (RP)
- Tri-n-butyl Phosphat (TBP)
- Tricresyl Phosphat (TCP)
- Triphenyl Phosphat (TPP),
die zumindest teilweise Bestandteil des Gehäuses (26), des Spulenkörpers (14), der Isolierung der Spulenwicklung (16) und/oder der Kunststoffumspritzung (82) für das Gehäuse des Betätigungsmagneten sind.

6. Betätigungsmagnet nach einem der vorhergehenden Ansprüche, **dadurch gekennzeichnet, dass** als aktives Sicherheitsmittel ein Löschmedium vorgesehen ist, wie Löschschaum, Löschgas und Löschflüid, unter Einbezug von nanopartikulären Löschsubstanzen.

7. Betätigungsmagnet nach Anspruch 6, **dadurch gekennzeichnet, dass** als
- Löschgas Stickstoff dient und als Stickstoffträger Melamin oder melaminhaltige Wirkverbindungen,
- Löschfluid für den Austrag von Wasser Aluminium Trihydroxid (ATH) und/oder Magnesium Hydroxyd (MDH),
- Löschschaum Ammonium Polyphosphate (APP), und
- nanopartikuläre Löschsubstanzen Silicate und/oder Graphit eingesetzt sind.

8. Betätigungsmagnet nach einem der vorhergehenden Ansprüche, **dadurch gekennzeichnet, dass** durch den Einsatz des jeweiligen Sicherheitsmittels eine zusätzliche elektrische Absicherung des Stromversorgungskreises (57) mit der Spulenwicklung (16), wie eine Schmelzsicherung, entfällt.

## Claims

1. An actuating magnet that can be electrically energised,
- having at least one coil former (14) disposed in a housing (76, 82), and on which a coil winding (16) is fitted,
- having an actuating part (20, 36) at least partially guided within the coil former (14), and
- having a safety apparatus for avoiding a potential fire risk,
- parts at least of the actuating magnet being equipped with at least one passive safety means of the safety apparatus so as to effectively counteract the fire risk,
- **characterised in that** in order to produce the coil winding (16) for the actuating magnet a current-guiding wire is used that is surrounded by insulation which is chosen from an insulation material class to bring about the early failure case through electric short-circuit of the coil winding (16) which in any case lies under a class size of the otherwise used heat-resistant wire insulation, and before reaching the critical temperature for a possible fire melts through.

2. The actuating magnet according to Claim 1, **characterised in that** for the coil winding (16) a winding wire according to DIN EN 60317, 1994 edition, according to parts 1, 2, 3, 4, 12, 19, 20, 21, 34 or a winding wire according to IEC 317 part 1, 2, 3, 4, 12, 19, 20, 21, 34 is used.

3. The actuating magnet according to any of the preceding claims, **characterised in that** the insulation is a coating insulation for the current-guiding wire, preferably in the form of a copper wire, and that the melting temperature of the relevant components for the actuating magnet lies above the melting temperature of the coating insulation used.

4. The actuating magnet according to any of the preceding claims, **characterised in that** as a passive safety means flame resistant or flame retardant materials are used and/or safety means for the production of a type of predetermined breaking point to bring about an early non-critical failure case for the actuating magnet.

5. The actuating magnet according to any of the preceding claims, **characterised in that** as passive safety means substances are used, such as:
- ammonium phosphate (AP)
- ammonium polyphosphate (APP)
- resorcinol bis-diphenylphosphate (PDP)
- red phosphor (RP)
- tri-n-butyl phosphate (TBP)
- tricresyl phosphate (TCP)
- triphenyl phosphate (TPP)
which are at least partially components of the housing (26), the coil former (15), the insulation of the coil winding (16) and/or the plastic encapsulation (82) for the housing of the actuating magnet.

6. The actuating magnet according to any of the preceding claims, **characterised in that** an extinguishing medium, such as an extinguishing foam, extinguishing gas and extinguishing fluid, including nanoparticulate extinguishing substances, are provided as active safety means.

7. The actuating magnet according to Claim 6, **characterised in that**
- nitrogen is used as an extinguishing gas, and melamine or melamine-containing active compounds are used as nitrogen vehicles,
- aluminium trihydroxide (ATH) and/or magnesium hydroxide (MDH) are used as extinguishing fluid for the discharge of water,
- ammonium polyphosphate (APP) is used as extinguishing foam, and
- silicates and/or graphite are used as nanoparticulate extinguishing substances.

8. The actuating magnet according to any of the preceding claims, **characterised in that** by using the respective safety means, an additional electrical safeguard of the power supply circuit (57) with the coil winding (16), such as a fuse, is avoided.

## Revendications

1. Aimant d'actionnement, pouvant être alimenté électriquement en courant,
- comprenant au moins un corps (14) de bobine, qui est disposé dans une enveloppe (76, 82) et sur lequel est appliqué un enroulement (16) de bobine,
- comprenant une partie (20, 36) d'actionnement guidée au moins en partie dans le corps (14) de bobine, et
- comprenant un dispositif de sécurité pour empêcher un danger d'incendie éventuel,
- dans lequel au moins des parties de l'aimant d'actionnement sont équipées d'au moins un moyen de sécurité passif du dispositif de sécurité pour faire face efficacement au danger d'incendie,
**caractérisé en ce que**, pour la réalisation de l'enroulement (16) de bobine de l'aimant d'actionnement, on se sert d'un fil conduisant le courant, qui est entouré d'un isolant, lequel est choisi, pour provoquer la défaillance précoce par court-circuit électrique de l'enroulement de bobine, dans une classe de substance isolante, qui, dans chaque cas, se trouve en-dessous d'une classe de l'isolant de fil résistant à la chaleur utilisé sinon et qui fond avant que la température critique pour un incendie éventuel ne soit atteinte.

2. Aimant d'actionnement suivant la revendication 1, **caractérisé en ce que**, pour l'enroulement (16) de bobine, on utilise un fil d'enroulement suivant DIN EN 60317, édition 1994, suivant les parties 1, 2, 3, 4, 12, 19, 20, 21, 34 ou un fil d'enroulement suivant IEC 317 part 1, 2, 3, 4, 12, 19, 20, 21, 34.

3. Aimant d'actionnement suivant l'une des revendications précédentes, **caractérisé en ce que** l'isolant est un vernis isolant pour le fil conduisant le courant, de préférence sous la forme d'un fil de cuivre, et **en ce que** le point de fusion des éléments déterminants pour l'aimant d'actionnement est supérieur au point de fusion du vernis isolant utilisé.

4. Aimant d'actionnement suivant l'une des revendications précédentes, **caractérisé en ce que** l'on utilise, comme moyen de sécurité passif, des substances difficilement inflammables et/ou des moyens de sécurité pour la réalisation d'une point destiné à se rompre, afin de provoquer une défaillance non critique prématurée de l'aimant d'actionnement.

5. Aimant d'actionnement suivant l'une des revendications précédentes, **caractérisé en ce qu'**on se sert, comme moyen de sécurité passif, de substances comme :
- le phosphate d'ammonium (PA)
- le polyphosphate d'ammonium (PPA)
- le bis-diphenylphosphate de résorcine (DPR)
- le phosphore rouge (PR)
- le phosphate de tri-n-butyle (PTB)
- le phosphate de tricrésyle (PTC)
- le phosphate de triphényle (PTP),
qui sont au moins en partie un constituant de l'enveloppe (26), du corps (14) de bobine, de l'isolant de l'enroulement (16) de bobine et/ou du recouvrement (82) par extrusion de l'enveloppe de l'aimant d'actionnement.

6. Aimant d'actionnement suivant l'une des revendications précédentes, **caractérisé en ce qu'**il est prévu comme moyen de sécurité actif, un milieu d'extinction, comme de la mousse d'extinction, du gaz d'extinction et du fluide d'extinction, avec incorporation de substances d'extinction sous forme de nanoparticules.

7. Aimant d'actionnement suivant la revendication 6, **caractérisé en ce qu'**on utilise
- comme gaz d'extinction, de l'azote et, comme source d'azote, de la mélamine ou des composés actifs contenant de la mélamine,
- comme fluide d'extinction, pour l'évacuation d'eau, du trioxyde d'aluminium (THA) et/ou de l'hydroxyde de magnésium (HM),
- comme mousse d'extinction, du polyphosphate d'ammonium (PPA), et
- comme substances d'extinction nanoparticulaires, des silicates et/ou du graphite.

8. Aimant d'actionnement suivant l'une des revendications précédentes, **caractérisé en ce que**, par l'utilisation du moyen de sécurité respectif, on se dispense d'une sécurité électrique supplémentaire du circuit (57) d'alimentation en courant ayant l'enroulement (16) de bobine, comme d'un fusible.
